(19)

**Europäisches Patentamt**

**European Patent Office**

**Office européen des brevets**

(11) **EP 3 660 602 B1**

(12) **EUROPEAN PATENT SPECIFICATION**

(45) Date of publication and mention
of the grant of the patent:
**07.06.2023 Bulletin 2023/23**

(21) Application number: **18209552.1**

(22) Date of filing: **30.11.2018**

(51) International Patent Classification (IPC):
**G05B 19/042** *(2006.01)* **G06F 21/53** *(2013.01)*
**G06F 8/656** *(2018.01)* **G05B 19/418** *(2006.01)*

(52) Cooperative Patent Classification (CPC):
**G05B 19/0426; G06F 8/656; G06F 21/53;**
G05B 2219/13153; G05B 2219/23327;
G05B 2219/2641; G05B 2219/2667;
G05B 2219/36056

(54) **TESTING CODE FOR AN INDUSTRIAL CONTROL PROGRAM IN AN ANCILLARY ENVIRONMENT**

TESTCODE FÜR EIN INDUSTRIELLES STEUERUNGSPROGRAMM IN EINER HILFSUMGEBUNG

CODE D'ESSAI POUR UN PROGRAMME DE CONTRÔLE INDUSTRIEL DANS UN
ENVIRONNEMENT AUXILIAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.06.2020 Bulletin 2020/23**

(73) Proprietor: **CODESYS Holding GmbH
87439 Kempten (DE)**

(72) Inventors:
• **Werner, Bernhard
87437 Kempten (DE)**
• **Reiter, Bernhard
87674 Immenhofen (DE)**

(74) Representative: **Kretschmann, Dennis
Boehmert & Boehmert
Anwaltspartnerschaft mbB
Pettenkoferstrasse 22
80336 München (DE)**

(56) References cited:
**EP-A1- 1 457 850     EP-A1- 1 916 583
US-A- 5 781 776     US-B1- 8 850 574**

Remarks:
The file contains technical information submitted after
the application was filed and not included in this
specification

**Description**

Technical Field

The present disclosure relates to the field of industrial control, and in particular to a method and system for modifying code for an industrial control program that allows testing code for an industrial control program in an ancillary environment.

Background

Industrial control programs may run on industrial controller units for real-time control of industrial processes, such as control of machinery or industrial processes. In many applications, industrial control programs are written in a high-level programming language in a programming environment, are compiled and then stored and run on an industrial controller unit that directly controls an associated machinery or industrial process.

It may sometimes be desirable or necessary to make corrections or amendments to the code of the industrial control program, at times even while the industrial control program is running on the industrial controller unit. In many applications, it is impractical or virtually impossible to pause execution of the industrial control program while these changes are being made, given that any such interruptions might affect the controlled machinery or industrial process.

In order to minimise the impact on the controlled machinery or industrial process, an online change of the industrial control program requires prudence and diligence, and hence should only be attempted by experienced personnel that is well-acquainted with the underlying process. Even with all due care and precautions, additional safety measures may sometimes be required to protect the machinery or industrial process, which may involve considerable extra time and effort. In spite of these safety precautions, mistakes do happen. Moreover, in some cases the revised industrial control program may not have the desired properties, and hence the changes need to be undone quickly, which is likewise failure-prone.

In view of these considerations, what is needed is an improved method and system that allows modification of an industrial control program even while the industrial control program is running on an industrial controller unit, and that minimises the impact of programming errors on the controlled machinery or industrial process.

EP 1 457 850 A1 discloses an online editing method for code running on a programmable controller without stopping the code. For the purpose of updating the code, a user program stored in user memory is initially replicated in a temporary user memory. The CPU then switches from the user memory to the temporary user memory during online editing. The user program in the user memory is then uploaded, and areas for a new function block can be secured by identifying unoccupied partitions. Code portions for calling the starting addresses of the new function block are inserted where the function is to be executed, and the edited program is again uploaded to the user memory to be eventually switched with the temporary user memory.

US 5,781,776 A discloses a method of online editing of real-time industrial control programs, wherein a portion of pre-existing program is replaced with a jump instruction conditional on the setting of a test edit flag, which, when the tests edit flag is set, redirects execution to a second area of memory containing new instructions. A second jump command returns execution towards the pre-existing section of the code.

Overview of the Invention

This objective is achieved with a method and system for modifying code for an industrial control program according to independent claims 1 and 8, respectively. The dependent claims relate to preferred embodiments.

In a first aspect, the disclosure relates to a method for modifying code for an industrial control program, comprising the steps of providing or receiving a code portion for an industrial control program; providing an ancillary data area pertaining to data to be accessed by the code portion, wherein the ancillary data area is distinct and/or separated from a program data area pertaining to the industrial control program; copying selected data from the program data area into the ancillary data area; and inserting the code portion into the industrial control program at a predetermined code position of the industrial control program.

By providing an ancillary data area pertaining to the data to be accessed by the code portion, and copying selected data from the program data area into the ancillary data area, the method according to the disclosure creates a sandbox or toy environment in which code modifications can be tested, and their effect on the running industrial control program and the associated machinery or industrial process can be assessed in that sandbox or toy environment. Only if and when these tests are successful, may these modifications be implemented and permitted to effect the associated machinery or industrial process.

These techniques may greatly simplify online modifications of an industrial control program running on an industrial controller unit. In particular, the requirements on the personnel that implements such modifications may be relaxed, and additional safety measures may no longer be required.

In the context of the present disclosure, a code portion may pertain to any part or portion or sequence of computer code adapted to be inserted into the industrial control program. In particular, the code portion may relate to a modification and/or a correction and/or a supplement of the industrial control program.

In some examples, the code portion may pertain to an empty instruction, and/or may contain a jump to another code position of the industrial control program, in particular to a subsequent code position of the industrial control program.

In this configuration, the techniques according to the present disclosure may be employed to uncomment or delimit a part of the industrial control program, such as for testing or maintenance purposes. In particular, the techniques permit to uncomment code without pausing execution of the industrial control program or the controlled industrial process.

An industrial control program, in the context of the present disclosure, may refer to any program adapted to control a device, machinery, or industrial process.

In some examples, the industrial control program and/or the code portion comprises a source code, such as a source code in a high-level programming language.

In other examples, the industrial control program and/or the code portion comprises a compiled code, assembler code, machine code or ladder logic instructions.

Depending on the nature and format of the industrial control program and/or the code portion, the method according to the first aspect may be implemented at various stages and/or various locations of an industrial control environment. For instance, in some applications the method may be implemented in a programming environment for an industrial control system. In other examples, the method may be implemented on a compiler unit adapted to compile high-level source code into a compiled industrial control program. In still further examples, the method may be implemented on an industrial controller unit adapted to run a compiled industrial control program.

The method may also be implemented in a distributed manner, with different method steps being implemented in different components of an industrial control environment.

In an example, the code portion is provided to an industrial controller unit, such as from a programming environment.

In other examples, the code portion is received at an industrial controller unit, such as from a programming environment.

According to an example, the method may further comprise compiling the industrial control program and/or the code portion.

In some examples, the method may be a computer-implemented method. In particular, the method may be implemented to automatically run on an industrial control system, such as on a compiler unit.

The ancillary data area, in the context of the present disclosure, refers to any data area or memory portion that holds data to be accessed by the code portion. The ancillary data area is distinct and/or separated from the program data area that holds the data for the industrial control program, and hence may be an additional data area or memory portion.

Providing the ancillary data area may comprise generating or allocating the ancillary data area, in particular as an additional data area.

The code portion may access the ancillary data area by reading from the ancillary data area, and/or by writing into the ancillary data area.

In particular, the code portion is adapted to access only data in the ancillary data area, in particular only read data from the ancillary data area. The code portion only writes data into the ancillary data area.

In an example, the code portion may not access data in the program data area. In particular, the code portion may not read data from the program data area and/or may not write data into the program data area.

This permits to limit the effect of the running of the code portion to the ancillary data area, and to prevent any undesirable side effects on the program data area, and hence from the running industrial control process or machinery.

In the context of the present disclosure, the selected data copied from the program data area into the ancillary data area may be a subset of data from the program data area.

According to an example, the selected data may comprise all the data required for running the code portion.

The method further comprises running the industrial control program comprising the code portion on an industrial controller unit.

While running the industrial control program comprising the code portion on the industrial controller unit, the code portion or industrial controller unit may access the selected data in the ancillary data area. In particular, the code portion exclusively access the selected data in the ancillary data area. At least at some initial stage, the code portion may not access the corresponding data in the program data area, or at least may be prevented from writing data to the program data area. This may allow the modified control program including the code portion to be tested without immediate or direct effect on the associated machinery or industrial process.

In an embodiment, inserting the code portion into the industrial control program may comprise generating a breakpoint at the predetermined code position, and inserting the code portion into the industrial control program at the breakpoint.

In the context of the present disclosure, a breakpoint may be understood as an intentional stopping location or pausing location in a program, in particular in a compiled program, which may sometimes be put in place for debugging purposes.

The inventors found that breakpoints provide a particularly efficient and versatile technique for inserting the code portion into the industrial control program, and are available for many different platforms.

Different implementations of breakpoints are encompassed in the scope of the present disclosure. In some examples, the breakpoint is a hardware breakpoint. In other examples, the breakpoint is a software breakpoint.

According to an embodiment, the method comprises patching the breakpoint into the industrial control program at the predetermined code position.

In an embodiment, the code portion is inserted into the industrial control program while running the industrial control program, in particular while running the industrial control program on an industrial controller unit.

The techniques of the present disclosure allow an efficient testing of code for an industrial control program in the ancillary environment provided by the ancillary data area even while the industrial control program is run in real time on an industrial controller unit.

The code portion may be inserted into the industrial control program without pausing execution of the industrial control program, in particular without pausing execution of the industrial control program on an industrial controller unit.

Inserting the code portion may comprise substituting the code portion for a code sequence in the industrial control program, such as by means of a breakpoint, in particular as a routine branched off or triggered from a breakpoint.

According to an example, inserting the code portion may comprise inserting the code portion, such as by means of a breakpoint, without shifting subsequent code in the industrial control program.

This allows modifying the industrial control program in real time and with minimum impact on the underlying machinery or industrial process.

The method further comprises monitoring a performance of the code portion in the industrial control program.

Monitoring the performance allows assessing the impact of the modified industrial control program comprising the code portion in the ancillary environment.

The method may further comprise terminating an execution of the code portion in response to the monitoring, in particular in case the performance of the code portion meets a predetermined condition.

This allows identifying and terminating faulty code running on the industrial controller unit. For instance, the monitoring may comprise monitoring a runtime of the code portion, and terminating an execution of the code portion in case the monitored runtime reaches or exceeds a predetermined runtime threshold.

The method comprises, depending on the monitoring, removing the code portion from the industrial control program or copying at least part of the data from the ancillary data area to the program data area.

Hence, faulty code may be removed, and the original code may be restored after it has been disproven in the sandbox or toy environment, and before it can affect the controlled machinery or industrial process.

If, however, the modified code performs well, the modified industrial control program may be maintained, and at least part of the data from the ancillary data area may be copied to the program data area.

The industrial control program comprising the code portion may now be run again on an industrial controller unit, wherein the code portion accesses data in the program data area. This allows testing the modified industrial control program in a real-world environment and with direct effect on the controlled machinery or industrial process, such as in a second stage after the modified code has proven successful in the sandbox or toy environment.

According to an embodiment, the method further comprises determining the data to be accessed by the code portion.

Based on the determined data to be accessed by the code portion, the ancillary data area may be selectively provided, generated and/or allocated.

Alternatively or additionally, the method may comprise verifying whether function calls by the code portion only affect data within the ancillary data area.

Such a verification may constitute a safety measure to prevent undesired or unintentional side effects of the code portion on the controlled machinery or industrial process. According to an example, the method comprises determining the data and/or functions to be accessed by the code portion, and providing and /or generating and/or allocating the ancillary data area in accordance with the determined data and/or functions, respectively. Hence, the ancillary data area may be tailored specifically in accordance with the data and/or functions that are potentially accessed by the code portion.

The disclosure further relates to a computer program or to a computer program product comprising computer-readable instructions, such that the computer-readable instructions, when run on a computing device, implement on the computing device a method with some or all of the features described above.

In a second aspect, the disclosure further relates to a system for modifying code for an industrial control program, comprising a code handler unit adapted to provide or receive a code portion for an industrial control program, and a data handler unit adapted to provide an ancillary data area pertaining to data to be accessed by the code portion, wherein the ancillary data area is distinct and/or separated from a program data area pertaining to the industrial control program. The data handler unit is adapted to copy selected data from the program data area into the ancillary data area, and the code handler unit is adapted to insert the code portion into the industrial control program at a predetermined code position of the industrial control program.

The system is adapted to implement a method with some or all of the features described above with reference to the first aspect.

In some embodiments, the code handler unit and the data handler unit may be implemented as two distinct and spatially separated units that may be communicatively coupled.

In other embodiments, the code handler unit and the data handler unit may be implemented in a common unit.

In some examples, the data handler unit and/or the code handler unit are implemented in hardware. In other examples, the data handler unit and/or the code handler unit may be implemented in software or firmware. In still further examples, the data handler unit and/or the code handler unit may be implemented partly in hardware and partly in software/firmware.

The system further comprises a monitoring unit adapted to monitor a performance of the code portion of the industrial control program.

In some examples, the monitoring unit may be implemented in hardware. In other examples, the monitoring unit may be implemented in software or firmware. In still further examples, the monitoring unit may be implemented partly in hardware and partly in software/firmware.

In some examples, the monitoring unit may be a separate or stand-alone unit. In other examples, the monitoring unit may be functionally integrated into the code handler unit and/or the data handler unit.

According to an embodiment, the data handler unit may be adapted to determine the data to be accessed by the code portion; and/or to verify whether function calls by the code portion only affect data within the ancillary data area.

The data handler unit may be adapted to determine the data and/or functions to be accessed by the code portion; and to provide the ancillary data in accordance with the determined data and/or functions, respectively.

In a third aspect, the disclosure further relates to an industrial controller unit, comprising a system with some or all of the features disclosed above with reference to the second aspect.

An industrial controller unit, in the context of the present disclosure, may be or may comprise any device adapted for running an industrial control program, such as in the form of a compiled program or ladder logic instructions.

The industrial controller unit may further comprise a processing unit adapted to run the industrial control program comprising the code portion.

Brief Description of the Drawings

The features and numerous advantages of the method and system according to the present disclosure will be best apparent from a detailed description of exemplary embodiments with reference to the enclosed drawings, in which:

Fig. 1    is a schematic illustration of a control environment in which a method and system according to the present disclosure may be employed;

Fig. 2    is a schematic illustration of a system for modifying code for an industrial control environment according to an embodiment; and

Fig. 3    is a flow diagram illustrating a method for modifying code for an industrial control program according to an embodiment.

Description of Embodiments

Examples of a method and system for modifying code for an industrial control program will now be described with reference to an exemplary industrial control environment 10 that involves control of a gantry crane 12 by means of industrial control software. However, this example is merely for illustration, in general the techniques according to the present disclosure may be employed for the industrial control of any kind of industrial process, comprising but not limited to control of industrial machinery, robots, chemical fabrication processes, or light control applications.

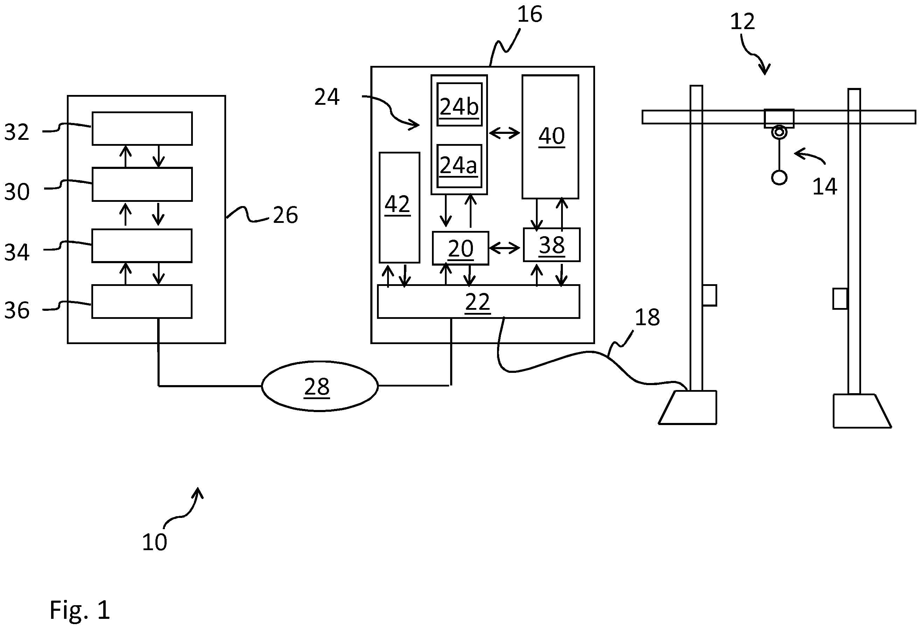

As illustrated in Figure 1, industrial control environment 10 comprises a gantry crane 12, which may be a crane employed in a factory environment to move heavy goods in an assembly hall by means of a movable hook assembly 14.

The industrial control environment 10 further comprises an industrial controller unit 16 that is connected to the gantry crane 12 by means of a control line 18, such as wired or wireless connection. In other examples, the industrial controller unit 16 may be integrated into the controlled machinery, such as the gantry crane 12.

The industrial controller unit 16 may comprise a processing unit 20, such as a CPU to run an industrial control program, such as in the form of a compiled program for controlling the gantry crane 12. To this end, the industrial controller unit 16 comprises a communication interface 22 that is connected to the processing unit 20 and is adapted to communicate with the gantry crane 12 via the control line 18. For instance, the processing unit 20 may provide instructions to the gantry crane 12 for the operation of actuators to move the hook assembly 14 along a pre-determined path, wherein the instructions may be provided via the communication interface 22 and the control line 18. The communication interface 22 may also receive sensor signals pertaining to an operation of the gantry crane 12 via the control line 18, and provide corresponding feedback to the processing unit 20. For instance, such sensor signals may relate to sensors indicating a position of the hook assembly 14 on the gantry crane 12.

As further illustrated in Figure 1, the industrial controller unit 16 also comprises a memory unit 24 connected to the processing unit 20. In particular, the memory unit 24 may comprise a predetermined program data area 24a, which may be an allocated data area in the memory unit 24 to store programs, function blocks, functions, data or data structures pertaining to an operation of the industrial controller unit 16.

The industrial control environment 10 may further comprise a programming environment 26 that is connected to the communication interface 22 via a network 28, such as a factory intranet or the Internet. For instance, the programming environment 26 may comprise a desktop PC or other computing device, and may be employed by a programmer to design and generate industrial control software for the industrial controller unit 16, for instance in the form of an industrial control program in a high-level programming language, such as C or C++. For instance, the industrial control program may comply with the industry standard IEC 61131-3.

The programming environment 26 may comprise a programming interface 30, such as a programming editor or graphical editor that allows a programmer to generate the industrial control program in the high-level programming language. The programming environment 26 may further comprise a programming memory unit 32 and a programming processor unit 34 that are connected to the programming interface 30. The programming memory unit 32 may store functions, function blocks or variables that can be employed by the programmer when generating the industrial control program. The programming processor unit 34 may provide the processing resources to run the programming interface 30 and to generate the industrial control program.

In some examples, the programming environment 26 may additionally comprise a compiler unit 36 that is adapted to convert the industrial control program from the high-level programming language into a compiled industrial control program in machine code.

The compiled industrial control program may then be provided to the industrial controller unit 16 via the network 28, and may be stored in the memory unit 24 and may be run in the processing unit 22 control operation of the gantry crane 12.

In other examples, the programming environment 26 provides the industrial control program to the industrial controller unit 16 via the network 28 in the high-level programming language, and the industrial controller unit 16 comprises a compiler unit (not shown) that compiles the high-level industrial control program into machine code.

It may sometimes be desirable to change the industrial control program running on the industrial controller unit 16. For instance, a programmer may want to modify a control routine that controls the movement of the hook assembly 14 of the gantry crane 12. However, in many applications these modifications should preferably be made without interrupting the execution of the industrial control program on the industrial controller unit 16, since such an interruption would effectively also interrupt the industrial process. For instance, the gantry crane 12 may be part of an industrial assembly line, and hence an interruption of the operation of the hook assembly 14 would effectively interrupt the entire industrial assembly line.

Moreover, in many applications it is desirable to make modifications to the industrial control program only tentatively at a first stage, to try and check how such modifications affect the industrial control program and the real-world industrial process. Only when such modifications have been proven to have the desired effect, the programmer may want to implement them permanently for control of the industrial process.

The techniques according to the present disclosure address these needs by providing an ancillary environment that allows testing code for the industrial control program in a way that safeguards against programming errors and prevents undesired side effects on other parts of the industrial control program or the controlled industrial process.

As can be taken from Figure 1, the industrial controller unit 16 according to an embodiment of the present disclosure additionally comprises a code handler unit 38 that is adapted to receive a code portion for an industrial control program. For instance, the code portion may be a modified portion of an industrial control program, and may be provided to the code handler unit 38 from the programming environment 26 via the network 28 and communication interface 22. The programmer may have created the code portion on the programming interface 30, and may have compiled it by means of the compiler unit 36. As an example, the code portion may pertain to a modified control routine that controls the movement of the hook assembly 14 of the gantry crane 12.

As can be further taken from Figure 1, the industrial controller unit 16 additionally comprises a data handler unit 40 that is communicatively coupled to the code handler unit 38 and is adapted to provide an ancillary data area 24b pertaining to data to be accessed by the code portion.

The data handler unit 40 analyses the code portion, and identifies read accesses and/or write accesses that are to be expected when running the code portion. The data handler unit 40 then generates or allocate the ancillary data area 24b in the memory unit 24 as a dedicated data area that is distinct and separated from the program data area 24a and that is adapted to exclusively hold the data to be accessed by the code portion.

The data handler unit 40 is further adapted to copy selected data from the program data area 24a into the ancillary data area 24b. In particular, the data handler unit 40 may copy data that is expected to be accessed when running the code portion from the program data area 24a into the ancillary data area 24b. The ancillary data area 24b may hence serve as a toy environment or sandbox in which modifications of the industrial control program may be tested without affecting the data stored in the program data area 24a that is accessed by other parts of the industrial control program and that is relevant for live operation of the gantry crane 12.

Once the ancillary data area 24b has been set up, the code handler unit 38 may be notified and may in response insert the code portion into the industrial control program at a code position chosen by the programmer.

The processing unit 20 may now run the modified industrial control program comprising the code portion, and all read and write accesses generated by the code portion may be into the ancillary data area 24b rather than the program data area 24a.

Figure 1 shows a configuration in which the code handler unit 38 and the data handler unit 40 are separate units that are communicatively coupled. However, this is for ease of presentation only, and in other configurations the code handler unit 38 and the data handler unit 40 may be combined into a single unit. The code handler unit 38 and/or the data handler unit 40 may also be integrated into other components of the industrial controller unit 16, such as integrated into the processing unit 20.

As further shown in Figure 1, the industrial controller unit 16 additionally comprises monitoring unit 42, which monitors a performance of the code portion in the industrial control program. For instance, the monitoring unit 42 may monitor the ancillary data area 24b and any potential side effects of the code portion on other parts of the industrial control program, and may trigger an exception in case of an error associated with the code portion. The monitoring unit 42 may also monitor a runtime of the code portion, and may terminate an execution of the code portion in case a monitored runtime reaches or exceeds a predetermined runtime threshold.

Severe errors or undesired side effects on the industrial control program or underlying industrial control process may hence be detected at an early stage, and the programmer may be notified with an error message submitted via the network 28.

If, however, the modified code performs well in the toy or sandbox environment, the data handler unit 40 copies the data from the ancillary data area 24b to the program data area 24a, and the modified industrial control program may now be run in a second stage with direct effect on the controlled process, such as the gantry crane 12.

The programmer may thereby test the effect of the revised code comprising the code portion on the overall industrial control environment 10, again making use of the monitoring unit 42. In case these effects do not correspond to what was intended, the programmer may decide to remove the code portion from the industrial control program, and hence return to the previous version of the industrial control program.

If, however, the revised code achieves the desired effect, the programmer may decide to maintain the revised code on the industrial controller unit 16, comprising the code portion.

in summary, the techniques according to the present invention can provide a two-step procedure for testing code for an industrial control program and an industrial control environment before the code goes live: In a first step, the modified code is tested by running the modified code on the processing unit 20 of the industrial controller unit 16, but all data accesses in the form of read accesses and/or write accesses are to an ancillary data area 24b that is distinct and separated from a main program data area 24a. In a subsequent second step, the modified code may be run on the processing unit 20 with access to the program data area 24a, and hence the effects on the remainder of the industrial control program and on the controlled process may be examined.

The techniques of the present disclosure have been described with reference to Figure 1 for a configuration in which the code handler unit 38, the data handler unit 40 and the monitoring unit 42 form part of the industrial controller unit 16. However, this is for illustration only, and the disclosure is not so limited. In other examples, some or all of the functionalities of the code handler unit 38 and/or data handler unit 40 and/or monitoring unit 42 may be located elsewhere in the industrial control environment 10, such as in the programming environment 26.

In the latter configuration, the programming environment 26 may generate the code portion for the industrial control program, and may provide the code portion to the industrial controller unit 16 via the network 28.

The programming environment 26 may also control the steps of providing an ancillary data area pertaining to data to be accessed by the code portion, wherein the ancillary data area is distinct and/or separated from a program data area pertaining to the industrial control program. The programming environment 26 may generate the ancillary data area in the industrial controller unit 16, or elsewhere in the industrial control environment 10.

The programming environment 26 may also trigger the copying of selected data from the program data area into the ancillary data area, and may trigger the inserting of the code portion into the industrial control program at the predetermined code position of the industrial control program.

The code portion and industrial control program may comprise compiled code, as described above in the example of Figure 1. However, the disclosure is not so limited, and in other examples the code portion and industrial control program may comprise ladder instructions, or may comprise a source code in a high-level programming language.

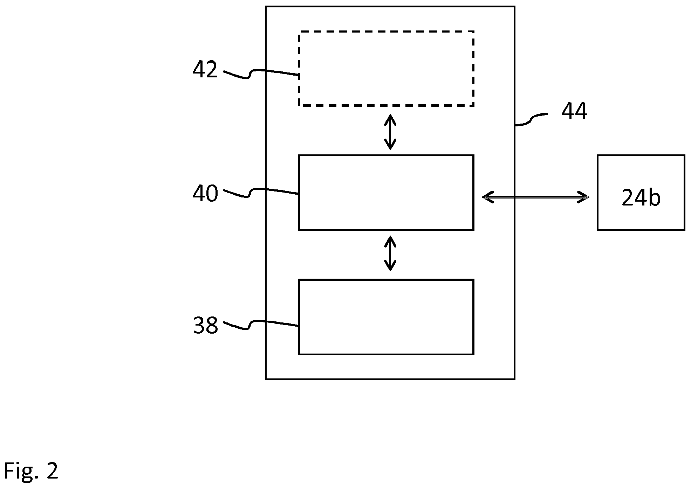

In more generality, a system 44 for modifying code for an industrial control program is illustrated in Figure 2, and comprises a code handler unit 38 adapted to provide or receive a code portion for an industrial control program, and a data handler unit 40 adapted to provide an ancillary data area 24b pertaining to data to be accessed by the code portion, wherein the ancillary data area 24b is distinct and/or are separated from a program data area pertaining to the industrial control program.

The data handler unit 40 is adapted to copy selected data from the program data area into the ancillary data area 24b, and the code handler unit 38 is adapted to insert the code portion into the industrial control program at a predetermined code position of the industrial control program.

The system 44 additionally comprises a monitoring unit 42 (shown in broken lines in Figure 2) that is adapted to monitor a performance of the code portion in the industrial control program.

As explained above with reference to Figure 1, the system 44 may form part of an industrial controller unit 16. In other embodiments, the system 44 may be fully or partially incorporated or located in a different component in the industrial control environment 10.

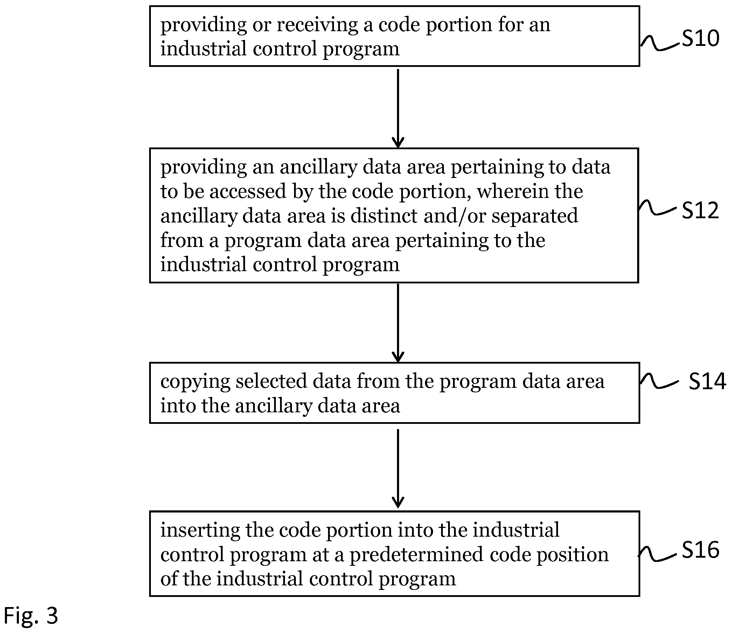

Figure 3 shows a flow diagram that illustrates a method for modifying code for an industrial control program according to an embodiment.

In a first step S10, a code portion for an industrial control program is provided or received. For instance, the code portion may be provided from a programming environment to an industrial controller unit, or may be received at the industrial controller unit from the programming environment.

In a subsequent step S12, an ancillary data area pertaining to data to be accessed by the code portion is provided, wherein the ancillary data area is distinct and/or separated from a program data area pertaining to the industrial control program.

For instance, the ancillary data area may be generated or allocated in a memory unit of the industrial controller unit, as described above with reference to the example of Figure 1.

In a subsequent step S14, selected data from the program data area is copied into the ancillary data area.

In a step S16, the code portion is inserted into the industrial control program at a predetermined code position of the industrial control program.

The flow diagram of Figure 3 shows the steps S10 to S16 in a certain order. However, this is a mere example, and in other embodiments the steps may be performed in a different order.

According to an example, the method is a computer-implemented method, i.e., implemented on a computing device.

One possible way of inserting the code portion into the industrial control program employs breakpoints. In the context of the present disclosure, a breakpoint may be understood as an intentional stopping or pausing location in a program, such as in a compiled industrial control program. Breakpoints may routinely be put in place for debugging purposes, and may open and branch off into a debugging routine. However, breakpoints can also be employed for measuring a runtime of an industrial control program, as described in EP 3 086 233 A1.

Breakpoints can be implemented in different ways, and it is a particular advantage of the techniques according to the present disclosure that they apply to various different breakpoint implementations.

For instance, breakpoints may be implemented in hardware. Most processors offer hardware support for the realization of breakpoints. For example, on x86 platforms (Intel Pentium and compatible) there are so-called debug registers. Four registers can be loaded with addresses and a control register can be used to define the type of breakpoint (e.g., code breakpoint or data breakpoint). If the processing runs through such an address, a special exception is triggered and the processing branches into a debugger routine.

On certain platforms, there is no other way to realize breakpoints because the code cannot be manipulated (for example, because the code runs in flash and this memory cannot be changed easily).

Alternatively, breakpoints may be implemented in software. These are breakpoints that may be realized by code manipulation, in particular by means of "patching". One or more assembler instructions may be written directly at the position of the generated code at which the processing is to be stopped. These assembler statements branch the execution into a debugger routine in which the further processing takes place. The statement with the branch may be a jump, a call or a software interrupt.

As a simple example, consider the following code in the building block:

```
x := x + 1;
```

Taking an x86 platform as an example, this code translates into the following binary code:

```
040C213E 0F BF 05 00 0F 0C 04   movsx   eax,word ptr ds:[40C0F00h]
040C2145 83 C0 Ff1              add     eax,1
040C2148 66 A3 00 0F 0C 04      mov     word ptr ds:[040C0F00h],ax
```

The address at which the integer variable x comes to lie in this case is 0x40C0F00. If a breakpoint is placed on the source code line, a call is patched to a special debug routine in the generated code:

```
040C213E E8 E8 27 02 FD         call    @ILT+14630(_syscpudebughandler) (10E492Bh)
040C2143 0C 04                  or      al,4
040C2145 83 C0 01               add     eax,1
040C2148 66 A3 00 0F 0C 04      mov     word ptr ds:[040C0F00h],ax
```

Note that the call has less bytes than the original assembler statement over which the call was patched. There are two bytes left, which are actually part of the address of x, interpreted by the disassembler as "or al, 4" in this example.

When the processing reaches this assembler statement, a jump to the function "syscpudebughandler" is executed. In this function, arbitrary operations may be performed, such as the execution of alternative code as described above with reference to the code portion.

If the debug handler method is left again, i.e. the processing is to be continued, the original code should be executed. There are different ways to do this:

(i) The original code can be executed elsewhere, and the processing is continued at the next assembler statement, in the example at the address 0x40C2145. It should be ensured that all register contents are set correctly, which is principally possible for all registers, except maybe for the program counter. For x86 platforms this generally does not matter, but on other platforms (e.g. ARM) addressing is oftentimes relative to the program counter.

(ii) Alternatively, the original code is patched back to the breakpoint position so it can be executed there. But then it should be guaranteed that the breakpoint is set again after the execution, so that the next run through the position is stopped again. Therefore another breakpoint may be simultaneously set to the successor address (in the example, to address 0x40C2145). The processing then returns to the original code, executes an instruction there and then branches immediately back into the debugger function. In the debugger function, the original breakpoint may then be set again, the breakpoint on the successor position may be deleted and the processing may return to the successor position.

Many systems also allow the user to specify a different position at a breakpoint for the execution of the next statement. The user may select a line or a network in his program and may execute a suitable command to set the position. The new position should usually be in the same function as the current position. In the runtime system, the return position from the breakpoint handler can then be manipulated so that processing is continued at another code position.

An exemplary method for modifying code for an industrial control program employing breakpoints will now be described in additional detail.

The programmer may mark one or more networks in a graphical programming language, or one or more statements in a textual programming language for which he wants to write alternative code, and may execute a corresponding command. He can then specify an alternative code in a suitable editor for the respective programming language, such as in the programming interface 30 of the programming environment 26. This code portion should preferably only contain calls to functions that do not trigger any side effects. As an example, calls to functions that require global variables should be avoided. The compiler unit may check potential side effects and, if necessary, report them to the programmer.

After completion of the modification, the programmer may transfer the code portion to the controller unit. Then executable code for this source code is generated and transferred to the controller unit, such as to the industrial controller unit 16 via the network 28. The code is generated in such a way that a separate ancillary data area 24b (a "sandbox") is reserved for all accesses to data in this code.

In addition, code may be generated which copies the data from the general program data area 24a into the sandbox 24b before processing the new code, and additional code which copies the data from the sandbox 24b into the general program data area 24a after processing the new code. However, the code for copying back into the general program data area may in some examples only be executed conditionally. This condition can be controlled by the programmer and may be FALSE by default.

At the same time, the code position and the length of the code to be replaced are transferred to the industrial controller unit 16.

On the industrial controller unit 16, the following sequence of steps may have now be performed:

(i) A breakpoint is generated at the position of the code to be replaced.

(ii) When the processing reaches this code position, the processing branches into a function in the runtime system ("breakpoint handler").

(iii) The breakpoint handler creates a thread in which the new code is executed. The breakpoint handler may monitor that the runtime of the thread does not exceed a certain predetermined duration (e.g. 10 ms). If this duration is exceeded, the thread may be terminated hard. In addition, the execution of the new code may be monitored by an exception handler. In case of an exception, the thread may terminate with an error return that describes the type of exception.

(iv) After processing the breakpoint handler, the runtime system function returns to the breakpoint location and executes the original code.

The programmer may now monitor the values in his editor as they are produced by the modified code. These values may be loaded from the sandbox 24b of the industrial controller unit 16. The changed code has no effect on the industrial process at this point.

If an exception or runtime overrun occurs during execution, this may be reported to the programmer or user.

If the programmer is convinced by observing the values that the new code meets his requirements, he can execute the alternative modified code instead of the original code on the controller in a second step via a command. Safety measures may be in place to ensure that this live change to the modified code is only possible if the execution of the new code did not result in an exception or a runtime overrun.

In the runtime system, the condition for writing back is then set to TRUE, which causes the data to be copied back from the sandbox 24b to the general program data area 24a after execution of the alternative code. At the same time, the breakpoint handler changes the return position in the user code to a code position after the code to be replaced.

In this way, the newly generated code becomes effective. The programmer can now observe the effects of the new code on the overall system. If these effects do not meet his objections, the programmer can decide to switch back to the old code by simply removing the breakpoint from the code.

If, however, he wants to take over the code on the industrial controller unit 16, then new code may be generated for the corresponding block and exchanged on the industrial controller unit 16. This can be done using proven state of the art methods.

These techniques can also be extended to support code that produces possible side effects, such as by generating alternative code for all functions that are called. This alternative code should preferably also only access data in the sandbox 24b, and alternative code should only call alternative code. However, this can potentially result in the need to copy a large amount of data into a sandbox 24b and back again, which may in some instances lead to runtime conditions not being met. The described techniques are therefore particularly suited for small, purely local changes.

Further details of an exemplary implementation will now be described with reference to code according to the technical standard IEC-61131-3 for programmable controllers. However, this is for ease of presentation only, and the examples may be easily translated into a different syntax.

Consider the following code example in a function block:

```
FUNCTION_BLOCK FB
    VAR_INPUT
        lr2: LREAL;
    END_VAR
    VAR_OUTPUT
        lr1: ARRAY [0..10] OF LREAL;
    END_VAR
    VAR
        i : DINT;
    END _VAR
    FOR i := 0 TO 10 DO // this for-loop shall be replaced
        lr1[i] := SIN(lr2 + (LREAL#0.1 * i));
```

```
END_FOR
END_FUNCTION_BLOCK
```

The programmer may want to amend a detail in the algorithm of the for-loop. The programmer may hence mark the three lines of code for the for-loop and may select this piece of code as the code portion to be replaced. The programmer may then enter the new code in another editor or in the same editor. For example, a modified for-loop may look as follows:

```
FOR i :=0 TO 10 DO                        //the replacement for loop
 lr1[i+1] := SIN(Ir2 + (LREAL#0.2*i));    //here is a bug, that we would like to detect
END_FOR
```

After generating the modified code portion, the programmer may execute a command to execute the code portion as a test. The compiler unit may now determine which variables are accessed in the new code, in the example the variables lr1, lr2 and i. These are all variables from the local scope of the function block.

A sandbox may now be created for these variables, which can be accessed by the modified code portion. The sandbox may be regenerated every time the code is executed, i.e., it may be placed in a newly allocated memory, so that the code can run in several tasks at the same time.

The structure for the sandbox can be defined as follows:

```
// sandbox-structure for test-execution
TYPE SANDBOX
STRUCT
 lr2: LREAL;
 lr1: ARRAY [0..10] OF LREAL;
i: DINT;
END_STRUCT
END_TYPE
```

The compiler may now generate a function to copy the values from the process data area 24a into the sandbox 24b. This function may directly access the global data of the process. In order to access variables on a stack, or variables in an instance, it may be necessary to pass this information into the function.

Both addresses can be determined from the context on the runtime system. In the example code, only values of a function block instance are accessed, so we only need the instance as input of the copy function:

```
FUNCTION COPY_IN
VAR_INPUT
   pFB : POINTER TO FB;
   pSandbox : POINTER TO SANDBOX;
END_VAR
   pSandbox^.lr2 := pFB^.lr2;
   pSandbox^.lr1 := pFB^.lr1;
   pSandbox^.i := pFB^.i;
END_FUNCTION
```

The compiler may further generate a function for executing the modified code with the data from the sandbox 24b:

```
FUNCTION EXECUTE_TEST_CODE
VAR_INPUT
   pSandbox : POINTER TO SANDBOX;
END_VAR
   FOR pSandbox^.i := 0 TO 10 DO
      pSandbox^.lr1[pSandbox^.i+1] := SIN(pSandbox^.lr2 + (LREAL#0.2 *
pSandbox^.i));
   END_FOR
END_FUNCTION
```

In addition, the compiler may generate a function for copying the data from the sandbox 24b into the process, such as into the program data area 24a:

```
FUNCTION COPY_OUT
VAR_INPUT
    pFB : POINTER TO FB;
    pSandbox : POINTER TO SANDBOX;
END_VAR
    pFB^.lr2 := pSandbox^.lr2;
    pFB^.lr1 := pSandbox^.lr1;
    pFB^.i := pSandbox^.i;
END_FUNCTION
```

Code for these functions may be generated and sent to the runtime system. A breakpoint can now be set there using the techniques described above, so that a suitable runtime system function is called when the code is executed and the for-loop position is reached.

The implementation of this handler may depend to some extent on the operating system and on the processor. The following C code therefore contains only one implementation sketch. The explanations pertaining to this code example can be found in the comments. The same or equivalent functionalities can be achieved with other high-level programming languages, and other operating systems and processors.

```
// typedefinition for function call with one argument
typedef void *FUN_CALL(void*);
// typedefinition for function call with two arguments
typedef void *COPY_FUN_CALL(void*, void*);

// typedefinition for structure needed for controlled execution of alternative code
typedef struct
{
        void*     pSandbox;
        FUN_CALL* pFunction;
        BOOL      Result;
}FunctionData;

// the context of the breakpoint as far as needed for this example code
typedef struct
{
    // the pointer to the current instance, determined from code context
        void* pInstance;
    // the program counter of the breakpoint code (return position)
        void* pPC;
} BPContext;

// the following variables are set by user command interaction
// this user command interaction is not described here
static BOOL s_ExecuteHard = FALSE;
// the position to return to, if the old code is to be replaced
static void* s_AfterExecutionPosition = NULL;
// the amount of data to allocate for the sandbox
static int s_SizeOfSandbox = 0;
// a pointer to the generated function containing alternative code
static FUN_CALL *pExecuteFunction = NULL;
// a pointer to the function for copying to the sandbox
static COPY_FUN_CALL *CopyToSandbox = NULL;
// a pointer to the function for copying from the sandbox
static COPY_FUN_CALL *CopyFromSandbox = NULL;

// a help function for controlled call of the generated new code
void ExecuteFunction(FunctionData* pfundata)
{
        __try
        {
                pfundata->pFunction(pfundata->pSandbox);
        }
```

```
        __except (1)
        {
                pfundata->Result =  FALSE;
        }
        pfundata->Result = TRUE;
};


// the breakpointhandler containing the correct context, according to the current
breakpoint
// position
void BreakpointHandler(BPContext *pBPContext)
{
        // the time out after which to exit the task hard
        // could also be defined by user control, here we expect no longer execution
than
    // 10 milliseconds
        int time_out_in_ms = 10;
        FunctionData data;
        data.pFunction = pExecuteFunction;
        data.pSandbox = malloc(s_SizeOfSandbox);

        CopyToSandbox(pBPContext->pInstance, data.pSandbox);

        // system specific functions are needed for task handler.
        // we create a task, start a task and wait for the task exit, but not more than
    10 ms
        HANDLE hTask = SysTaskCreate("TestNameTask", ExecuteFunction, &data);
        SysTaskResume(hTask);
        SysTaskExit(hTask, time_out_in_ms);

        if (s_ExecuteHard)
        {
                CopyFromSandbox(pBPContext->pInstance, data.pSandbox);
                pBPContext->pPC = s_AfterExecutionPosition;
        }

        // function to store the context of the sandbox before destroying its contents
        // we only monitor the data for the last execution of the alternative code
        StoreSandBoxForMonitoring(data.pSandbox);
        free(data.pSandbox);
};
```

The example described above shows some of the advantages of the techniques of the present disclosure. When executing the alternative modified code, an error occurred: the loop writes beyond the boundary of the array. It is relatively likely that the loop counter i will be overwritten as a consequence. It can happen that the loop does not terminate, and it can also happen that another access within the loop triggers an exception. Most likely the loop terminates, but the value in the loop counter i is unexpected (expected to be 11), and the array will not have been filled in the expected way either. The user now has the option to abort the execution of the alternative code, to correct the error and repeat the test.

Let us assume the following corrected code for our example:

```
FOR i := 0 TO 10 DO                          // the replacement for loop
   lr1[i] := SIN(lr2 + (LREAL#0.2 * i));
END_FOR
```

The programmer may now check whether the new code has the desired effect. If so, the programmer can test this new code and check the effect of the differently calculated variables on the live process, such as on the gantry crane 12.

The whole process can be executed as the industrial control program is running on the industrial controller unit and controls the industrial control process, such as the gantry crane 12.

If the test works out well, the programmer may generate new code for the changed function so that it can be exchanged on the runtime system.

The examples and the figures merely serve to illustrate the method and the system according to the disclosure, but should not be understood to imply any limitation. The scope of the disclosure is to be determined by means of the appended claims.

Reference Signs

| | |
|---|---|
| 10 | industrial control environment |
| 12 | gantry crane |
| 14 | hook assembly of gantry crane 12 |
| 16 | industrial controller unit |
| 18 | control line |
| 20 | processing unit |
| 22 | communication interface |
| 24 | memory unit |
| 24a | program data area |
| 24b | ancillary data area |
| 26 | programming environment |
| 28 | network |
| 30 | programming interface |
| 32 | programming memory unit |
| 34 | programming processor unit |
| 36 | compiler unit |
| 38 | code handler unit |
| 40 | data handler unit |
| 42 | monitoring unit |
| 44 | system for modifying code for an industrial control program |

**Claims**

1. A method for modifying code for an industrial control program running on an industrial controller unit (16), comprising:

   providing to the industrial controller unit (16), or receiving at the industrial controller unit (16) a code portion for the industrial control program;
   the method being **characterized in that** it further comprises:

   providing an ancillary data area (24b) for holding values of variables to be accessed by the code portion, wherein the ancillary data area (24b) is distinct and/or separated from a program data area (24a) that holds data for the industrial control program;
   inserting the code portion into the industrial control program at a predetermined code position of the industrial control program, wherein the code portion is adapted to only write data into the ancillary data area (24b);
   copying values of variables that are expected to be accessed by the code portion from the program data area (24a) into the ancillary data area (24b) before processing the code portion;
   running the industrial control program comprising the code portion on the industrial controller unit (16);

   monitoring a performance of the code portion in the industrial control program, and, depending on the monitoring:

   removing the code portion from the industrial control program; or
   copying at least part of the data from the ancillary data area (24b) to the program data area (24a).

2. The method according to claim 1, wherein inserting the code portion into the industrial control program comprises generating a breakpoint at the predetermined code position, and inserting the code portion into the industrial control program at the breakpoint.

3. The method according to any of the preceding claims, wherein the code portion is inserted into the industrial control program while running the industrial control program, in particular while running the industrial control program on an industrial controller unit (16).

4. The method according to any of the preceding claims, further comprising:
terminating an execution of the code portion in response to the monitoring, in particular in case the performance of the code portion meets a predetermined condition.

5. The method according to any of the preceding claims, further comprising:

   determining the data to be accessed by the code portion; and/or
   verifying whether function calls by the code portion only affect data within the ancillary data area (24b).

6. The method according to any of the preceding claims, further comprising:

   determining the data and/or functions to be accessed by the code portion; and
   providing the ancillary data area (24b) in accordance with the determined data and/or functions, respectively.

7. A computer program comprising computer-readable instructions, such that the computer-readable instructions, when run on a computing device, implement on the computing device a method according to any of the preceding claims.

8. A system (44; 16) for modifying code for an industrial control program running on an industrial controller unit (16), comprising:

   a code handler unit (38) adapted to provide to the industrial controller unit (16), or receive at the industrial controller unit (16) a code portion for an industrial control program;
   wherein the code handler unit (38) is adapted to insert the code portion into the industrial control program at a predetermined code position of the industrial control program,
   **characterized in that**
   the system comprises a data handler unit (40) adapted to provide an ancillary data area (24b) for holding values of variables to be accessed by the code portion, wherein the ancillary data area (24b) is distinct and/or separated from a program data area (24a) that holds data for the industrial control program;
   the data handler unit (40) is adapted to copy values of variables that are expected to be accessed by the code portion from the program data area (24a) into the ancillary data area (24b) before the code portion is processed;
   wherein the code portion is adapted to only write data into the ancillary data area (24b), and
   the system (44; 16) further comprising a monitoring unit (42) adapted to monitor a performance of the code portion in the industrial control program, and the system (44; 16) is configured to
   run the industrial control program comprising the code portion on the industrial controller unit (16), and depending on the monitoring:

      remove the code portion from the industrial control program; or
      copy at least part of the data from the ancillary data area (24b) to the program data area (24a).

9. The system (44; 16) according to claim 8, wherein the data handler unit (40) is adapted to determine the data to be accessed by the code portion; and/or to verify whether function calls by the code portion only affect data within the ancillary data area (24b).

10. The system (44; 16) according to claim 8 or 9, wherein the data handler unit (40) is adapted to determine the data and/or functions to be accessed by the code portion; and to provide the ancillary data area (24b) in accordance with the determined data and/or functions, respectively.

11. An industrial controller unit (16), comprising a system (44) according to any of the claims 8 to 10.

12. The industrial controller unit (16) according to claim 11, further comprising a processing unit (20) adapted to run the industrial control program comprising the code portion.

**Patentansprüche**

1. Verfahren zum Modifizieren von Code für ein industrielles Steuerungsprogramm, das auf einer industriellen Steuerungseinheit (16) läuft, umfassend:

   Bereitstellen an die industrielle Steuerungseinheit (16) oder Empfangen an der industriellen Steuerungseinheit (16) eines Codeabschnitts für das industrielle Steuerungsprogramm;
   wobei das Verfahren **dadurch gekennzeichnet ist, dass** es ferner umfasst:

   Bereitstellen eines Zusatzdatenbereichs (24b) zum Halten von Werten von Variablen, auf die durch den Codeabschnitt zugegriffen werden soll, wobei der Zusatzdatenbereich (24b) von einem Programmdatenbereich (24a), der Daten für das industrielle Steuerungsprogramm hält, verschieden und/oder getrennt ist;
   Einfügen des Codeabschnitts in das industrielle Steuerungsprogramm an einer vorbestimmten Codeposition des industriellen Steuerungsprogramms, wobei der Codeabschnitt dazu eingerichtet ist, um Daten in den Zusatzdatenbereich (24b) ausschließlich zu schreiben;
   Kopieren von Werten von Variablen, von denen erwartet wird, dass auf sie durch den Codeabschnitt zugegriffen wird, aus dem Programmdatenbereich (24a) in den Zusatzdatenbereich (24b), bevor der Codeabschnitt verarbeitet wird;
   Laufenlassen des industriellen Steuerungsprogramms, das den Codeabschnitt umfasst, auf der industriellen Steuerungseinheit (16);

   Überwachen einer Leistung des Codeabschnitts in dem industriellen Steuerungsprogramm, und, in Abhängigkeit von dem Überwachen:

   Entfernen des Codeabschnitts aus dem industriellen Steuerungsprogramm; oder
   Kopieren mindestens eines Teils der Daten aus dem Zusatzdatenbereich (24b) in den Programmdatenbereich (24a).

2. Verfahren nach Anspruch 1, wobei das Einfügen des Codeabschnitts in das industrielle Steuerungsprogramm ein Erzeugen eines Haltepunkts an der vorbestimmten Codeposition und ein Einfügen des Codeabschnitts in das industrielle Steuerungsprogramm an dem Haltepunkt umfasst.

3. Verfahren nach einem der vorhergehenden Ansprüche, wobei der Codeabschnitt während des Laufenlassens des industriellen Steuerungsprogramms, insbesondere während des Laufenlassens des industriellen Steuerungsprogramms auf einer industriellen Steuerungseinheit (16), in das industrielle Steuerungsprogramm eingefügt wird.

4. Verfahren nach einem der vorhergehenden Ansprüche, ferner umfassend:
   Beenden einer Ausführung des Codeabschnitts in Reaktion auf das Überwachen, insbesondere im Falle, dass die Leistung des Codeabschnitts eine vorbestimmte Bedingung erfüllt.

5. Verfahren nach einem der vorhergehenden Ansprüche, ferner umfassend:

   Bestimmen der Daten, auf die durch den Codeabschnitt zugegriffen werden soll; und/oder
   Verifizieren, ob Funktionsaufrufe durch den Codeabschnitt nur Daten innerhalb des Zusatzdatenbereichs (24b) beeinflussen.

6. Verfahren nach einem der vorhergehenden Ansprüche, ferner umfassend:

   Bestimmen der Daten und/oder Funktionen, auf die durch den Codeabschnitt zugegriffen werden soll; und
   Bereitstellen des Zusatzdatenbereichs (24b) entsprechend den bestimmten Daten bzw. Funktionen.

7. Computerprogramm, das computerlesbare Anweisungen umfasst, so dass die computerlesbaren Anweisungen, wenn sie auf einer Rechenvorrichtung laufen gelassen werden, auf der Rechenvorrichtung ein Verfahren nach einem der vorhergehenden Ansprüche implementieren.

8. System (44; 16) zum Modifizieren von Code für ein industrielles Steuerungsprogramm, das auf einer industriellen Steuerungseinheit (16) läuft, umfassend:

eine Code-Handhabungseinheit (38), die dazu eingerichtet ist, um der industriellen Steuerungseinheit (16) einen Codeabschnitt für ein industrielles Steuerungsprogramm bereitzustellen oder an der industriellen Steuerungseinheit (16) einen Codeabschnitt für ein industrielles Steuerungsprogramm zu empfangen;

wobei die Code-Handhabungseinheit (38) dazu eingerichtet ist, um den Codeabschnitt an einer vorbestimmten Codeposition des industriellen Steuerungsprogramms in das industrielle Steuerungsprogramm einzufügen, **dadurch gekennzeichnet, dass**

das System eine Daten-Handhabungseinheit (40) umfasst, die dazu eingerichtet ist, um einen Zusatzdatenbereich (24b) zum Halten von Werten von Variablen bereitzustellen, auf die durch den Codeabschnitt zugegriffen werden soll, wobei der Zusatzdatenbereich (24b) von einem Programmdatenbereich (24a), der Daten für das industrielle Steuerungsprogramm hält, verschieden und/oder getrennt ist;

wobei die Daten-Handhabungseinheit (40) dazu eingerichtet ist, um Werte von Variablen, von denen erwartet wird, dass auf sie durch den Codeabschnitt zugegriffen wird, aus dem Programmdatenbereich (24a) in den Zusatzdatenbereich (24b) zu kopieren, bevor der Codeabschnitt verarbeitet wird; wobei der Codeabschnitt dazu eingerichtet ist, um Daten in den Zusatzdatenbereich (24b) ausschließlich zu schreiben, und

wobei das System (44; 16) ferner eine Überwachungseinheit (42) umfasst, die dazu eingerichtet ist, um eine Leistung des Codeabschnitts in dem industriellen Steuerungsprogramm zu überwachen, und

wobei das System (44; 16) dazu eingerichtet ist, um das industrielle Steuerungsprogramm, das den Codeabschnitt umfasst, auf der industriellen Steuerungseinheit (16) ablaufen zu lassen, und in Abhängigkeit von der Überwachung:

den Codeabschnitt aus dem industriellen Steuerungsprogramm zu entfernen; oder

mindestens einen Teil der Daten aus dem Zusatzdatenbereich (24b) in den Programmdatenbereich (24b) zu kopieren.

9. System (44; 16) nach Anspruch 8, wobei die Daten-Handhabungseinheit (40) dazu eingerichtet ist, um die Daten zu bestimmen, auf die durch den Codeabschnitt zugegriffen werden soll; und/oder zu verifizieren, ob Funktionsaufrufe durch den Codeabschnitt nur Daten innerhalb des Zusatzdatenbereichs (24b) beeinflussen.

10. System (44; 16) nach Anspruch 8 oder 9, wobei die Daten-Handhabungseinheit (40) dazu eingerichtet ist, um die Daten und/oder Funktionen zu bestimmen, auf die durch den Codeabschnitt zugegriffen werden soll; und um den Zusatzdatenbereich (24b) entsprechend den bestimmten Daten bzw. Funktionen bereitzustellen.

11. Industrielle Steuerungseinheit (16), umfassend ein System (44) nach einem der Ansprüche 8 bis 10.

12. Industrielle Steuerungseinheit (16) nach Anspruch 11, ferner umfassend eine Verarbeitungseinheit (20), die dazu eingerichtet ist, um das industrielle Steuerungsprogramm, das den Codeabschnitt umfasst, ablaufen zu lassen.

**Revendications**

1. Procédé de modification d'un code pour un programme de commande industrielle s'exécutant sur une unité de contrôleur industriel (16), comprenant l'étape ci-dessous consistant à :

fournir, à l'unité de contrôleur industriel (16), ou recevoir, au niveau de l'unité de contrôleur industriel (16), une partie de code pour le programme de commande industrielle, le procédé étant **caractérisé en ce qu'**il comprend en outre les étapes ci-dessous consistant à:

fournir une zone de données auxiliaires (24b) destinée à maintenir des valeurs de variables auxquelles la partie de code doit accéder, dans laquelle la zone de données auxiliaires (24b) est distincte et/ou séparée d'une zone de données de programme (24a) qui maintient des données pour le programme de commande industrielle;

insérer la partie de code dans le programme de commande industrielle, à une position de code prédéterminée du programme de commande industrielle, dans laquelle la partie de code est apte à écrire uniquement des données dans la zone de données auxiliaires (24b); copier des valeurs de variables auxquelles on s'attend à ce que la partie de code accède, de la zone de données de programme (24a) dans la zone de données auxiliaires (24b), avant de traiter la partie de code;

exécuter le programme de commande industrielle comprenant la partie de code sur l'unité de contrôleur industriel (16);

surveiller une performance de la partie de code dans le programme de commande industrielle, et, en fonction de l'étape de surveillance:

supprimer la partie de code du programme de commande industrielle; ou
copier au moins une partie des données, de la zone de données auxiliaires (24b) vers la zone de données de programme (24a).

2. Procédé selon la revendication 1, dans lequel l'étape d'insertion de la partie de code dans le programme de commande industrielle comprend l'étape consistant à générer un point d'interruption à la position de code prédéterminée, et à insérer la partie de code dans le programme de commande industrielle au point d'interruption.

3. Procédé selon l'une quelconque des revendications précédentes, dans lequel la partie de code est insérée dans le programme de commande industrielle pendant l'exécution du programme de commande industrielle, en particulier pendant l'exécution du programme de commande industrielle sur une unité de contrôleur industriel (16).

4. Procédé selon l'une quelconque des revendications précédentes, comprenant en outre l'étape ci-dessous consistant à :
mettre fin à une exécution de la partie de code en réponse à l'étape de surveillance, en particulier dans le cas où la performance de la partie de code répond à une condition prédéterminée.

5. Procédé selon l'une quelconque des revendications précédentes, comprenant en outre les étapes ci-dessous consistant à :
déterminer les données auxquelles la partie de code doit accéder ; et/ou vérifier si des appels de fonction par la partie de code n'affectent que des données dans la zone de données auxiliaires (24b).

6. Procédé selon l'une quelconque des revendications précédentes, comprenant en outre les étapes ci-dessous consistant à :

déterminer les données et/ou les fonctions auxquelles la partie de code doit accéder ; et
fournir la zone de données auxiliaires (24b) conformément aux données et/ou aux fonctions déterminées, respectivement.

7. Programme informatique comprenant des instructions lisibles par ordinateur, de sorte que les instructions lisibles par ordinateur, lorsqu'elles sont exécutées sur un dispositif informatique, mettent en oeuvre, sur le dispositif informatique, un procédé selon l'une quelconque des revendications précédentes.

8. Système (44 ; 16) destiné à modifier un code d'un programme de commande industrielle s'exécutant sur une unité de contrôleur industriel (16), comprenant:

une unité de gestionnaire de code (38) apte à fournir, à l'unité de contrôleur industriel (16), ou à recevoir, au niveau de l'unité de contrôleur industriel (16), une partie de code pour un programme de commande industrielle;
dans lequel l'unité de gestionnaire de code (38) est apte à insérer la partie de code dans le programme de commande industrielle, à une position de code prédéterminée du programme de commande industrielle;
**caractérisé en ce que**:

le système comprend une unité de gestionnaire de données (40) apte à fournir une zone de données auxiliaires (24b) pour maintenir des valeurs de variables auxquelles la partie de code doit accéder, dans laquelle la zone de données auxiliaires (24b) est distincte et/ou séparée d'une zone de données de programme (24a) qui maintient des données pour le programme de commande industrielle;
l'unité de gestionnaire de données (40) est apte à copier des valeurs de variables auxquelles on s'attend à ce que la partie de code accède, de la zone de données de programme (24a) dans la zone de données auxiliaires (24b), avant que la partie de code ne soit traitée;
dans laquelle la partie de code est apte à écrire uniquement des données dans la zone de données auxiliaires (24b); et

le système (44 ; 16) comprenant en outre une unité de surveillance (42) apte à surveiller une performance de la partie de code dans le programme de commande industrielle, et le système (44 ; 16) est configuré de manière à:
exécuter le programme de commande industrielle comprenant la partie de code sur l'unité de contrôleur industriel (16), et en fonction de l'étape de surveillance :

supprimer la partie de code du programme de commande industrielle ; ou
copier au moins une partie des données, de la zone de données auxiliaires (24b) vers la zone de données de programme (24a).

9. Système (44 ; 16) selon la revendication 8, dans lequel l'unité de gestionnaire de données (40) est apte à déterminer les données auxquelles la partie de code doit accéder ; et/ou à vérifier si des appels de fonction par la partie de code n'affectent que les données dans la zone de données auxiliaires (24b).

10. Système (44 ; 16) selon la revendication 8 ou 9, dans lequel l'unité de gestionnaire de données (40) est apte à déterminer les données et/ou les fonctions auxquelles la partie de code doit accéder ; et à fournir la zone de données auxiliaires (24b) conformément aux données et/ou fonctions déterminées, respectivement.

11. Unité de contrôleur industriel (16), comprenant un système (44) selon l'une quelconque des revendications 8 à 10.

12. Unité de contrôleur industriel (16) selon la revendication 11, comprenant en outre une unité de traitement (20) apte à exécuter le programme de commande industrielle comprenant la partie de code.

Fig. 1

EP 3 660 602 B1

Fig. 2

EP 3 660 602 B1

```
┌─────────────────────────────────────────────┐
│ providing or receiving a code portion for an │      ⌇ S10
│ industrial control program                   │
└─────────────────────────────────────────────┘
                      │
                      ▼
┌─────────────────────────────────────────────┐
│ providing an ancillary data area pertaining to data │
│ to be accessed by the code portion, wherein the     │  ⌇ S12
│ ancillary data area is distinct and/or separated    │
│ from a program data area pertaining to the          │
│ industrial control program                          │
└─────────────────────────────────────────────┘
                      │
                      ▼
┌─────────────────────────────────────────────┐
│ copying selected data from the program data area │    ⌇ S14
│ into the ancillary data area                     │
└─────────────────────────────────────────────┘
                      │
                      ▼
┌─────────────────────────────────────────────┐
│ inserting the code portion into the industrial      │
│ control program at a predetermined code position    │  ⌇ S16
│ of the industrial control program                   │
└─────────────────────────────────────────────┘
```

Fig. 3

**REFERENCES CITED IN THE DESCRIPTION**

**Patent documents cited in the description**

- EP 1457850 A1
- US 5781776 A
- EP 3086233 A1